Europäisches Patentamt

European Patent Office

Office européen des brevets

(19)

(11) Publication number: **0 233 729**
**A2**

# EUROPEAN PATENT APPLICATION

(21) Application number: **87300975.7**

(22) Date of filing: **04.02.87**

(51) Int. Cl.⁴: **C 08 L 67/02**
C 08 L 59/00, C 08 K 3/24,
C 08 K 7/08, C 08 K 7/06

(30) Priority: **10.02.86 JP 27302/86**

(43) Date of publication of application:
**26.08.87 Bulletin 87/35**

(84) Designated Contracting States:
**AT BE CH DE ES FR GB GR IT LI LU NL SE**

(71) Applicant: **POLYPLASTICS CO. LTD.**
**30 Azuchimachi 2-chome**
**Higashi-ku Osaka-shi (JP)**

(72) Inventor: **Nakai, Mikio**
**885-11, Miyajima**
**Fuji-shi Shizuoka (JP)**

**Takahashi Katsuhiko**
**324,Miyashita**
**Fuji-shi§Shizuoka (JP)**

**Sugita Eizo**
**163-10,Morijima**
**Fuji-shi§Shizuoka (JP)**

(74) Representative: **Livsey, Giibert Charlesworth Norris et al**
**HYDE, HEIDE & O'DONNELL 146 Buckingham Palace Road**
**London SW1W 9TR (GB)**

(54) **Rotary parts.**

(57) Rotary parts, such as gears, cums, rollers and pulleys, comprises a moulded article of a resin composition comprising polybutylene terephthalate or polyacetal and fibers of potassium titanate. It may further contain carbon fibers. It is especially improved in heat resistance.

**Description**

Rotary Parts

This invention relates to light-weight resin-made rotary parts, such as for example toothed wheels, cams, roller, and pulleys, which are easy to manufacture, and which have excellent characteristics, such as high strength, high accuracy, low noise, high friction resistance, and high thermal resistance. More specifically, the invention provides resin-made rotary parts, such as toothed-wheels, which have these performance characteristics under comparatively high temperature conditions and which are adaptable to a wide range of applications.

Resin-made rotary parts, such as toothed wheels, for various machines are lighter in weight than metal-made ones and are favorably compared with the latter in self-lubricating quality, corrosion resistance, low-noise performance, processability, and adaptability for mass production; therefore, they are widely used in various fields of application. On the other hand, however, resin-made parts are generally less favorable in strength, heat resistance and deformation resistance, and are liable to greater shrinkage during processing operation, reflecting the inherent shortcomings of resin materials. More particularly, parts employed adjacent a heating element, or for example, motor-connected gears, such as auto wiper gear and power window gear, are liable to changes in their physical properties since they are in a hot-temperature atmosphere; as such, they may become unsatisfactory in performance and thus the effective utilization thereof may be often hampered.

In such situation, there are much needs for improved resin-made rotary parts wherein common advantages of resin-made parts are best utilized, and wherein the improvements assure the maintenance to certain necessary limits of their mechanical properties and resistance to deformation, and more particularly those under hot-temperature conditions. In the state of the art today, however, such needs are not satisfactorily met.

This invention has as its primary object the provision of resin-made rotary parts, such as toothed wheels and the like, which have various such outstanding features characteristic of resin- made parts and not found with metal-made parts as light weight, self-lubricating property, high corrosion-resistance, low-noise performance, easy-to-process quality, and good adaptability for mass production, and which have good mechanical properties and more particularly high performance quality in a wide temperature range.

After their researches conducted toward solving such problem and obtaining rotary parts, such as toothed wheels, which have high performance quality in a wide temperature range, the present inventors arrived at this invention.

The invention provides a rotary part molded from a resin composition comprising (A) a polybutylene terephthalate resin or polyacetal resin, (B) 3 - 50% by weight of potassium titanate fibers relative to the total weight of the composition, and (C) 0 - 20% by weight of carbon fibers relative to the total weight of the composition.

Rotary parts of the invention, such as gears, cums, rollers and pulleys, comprises a moulded article of a resin composition comprising 50 to 97 wt.% of polybutylene terephthalate or polyacetal and 3 to 50 wt.% of fibers of potassium titanate. It may further contain up to 20 wt.% of carbon fibers. It is especially improved in heat resistance.

Brief Description of the Drawings

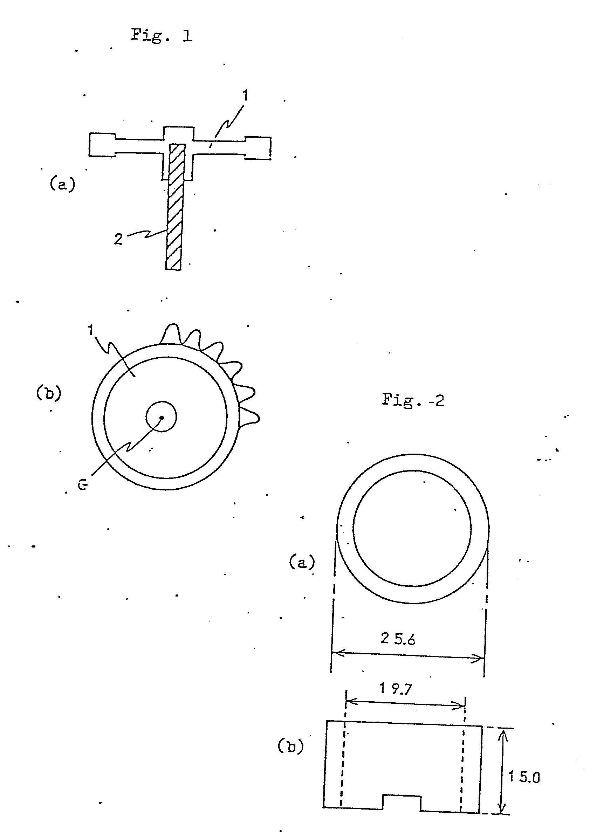

Fig. 1 is a view illustrating a spur gear with a metal shaft, subjected to testing; Fig. 2 is a view showing a cylindrical test piece subjected to testing.

Values given in Fig. 2 are in terms of mm.

1 ... resin-made spur gear

2 ... metal shaft

G ... gate

The polybutylene terephthalate resin, one of the resin components of the rotary parts according to the invention, is essentially a resin produced by polycondensation of terephthalic acid or a derivative of terephihalic acid with butanediol, and embraces those of the type in which a portion of the acid ingredient is replaced by any of such other dicarboxylic acids as isophthalic acid, adipic acid, and sebacic acid, or in which a portion of the diol ingredient is replaced by any of such other ingredients as ethylene glycol, hexamethylene glycol, decamethylene glycol, polytetramethylene glycol, and cyclohexane dimethanol.

For such polybutylene terephthalate resin ingredient, it is suitable to use one having a relative viscosity of 0.7 - 1.75, preferably 1.0 - 1.65, as measured in a concentration of 0.5 gr per 100 ml of orthochlorophenol solution and at 25°C. If the relative viscosity of the polybutylene terephthalate resin is less than 0.7, the rotary part produced is of low mechanical strength; and if the relative viscosity is more than 1.75, the moldability of the resin is extremely poor.

For another basic resin component of the composition for the rotary parts according to the invention, or the polyacetal resin component, any polyoxymethylene homopolymer or copolymer which is widely industrially produced and used today, and also any polyacetals having a cross-linked or grafted structure, or block copolymers, may be effectively used.

For such resin component, no special consideration is required as to the viscosity (molecular weight) of the resin, except where the viscosity is abnormal, and any may be selected for use in consideration of the physical property requirements.

The resin component for the rotary parts, such as toothed wheels, according to the invention, is a resin consisting principally of aforesaid polybutylene terephthalate resin or polyacetal resin, but depending upon the purpose for which such part is used, it is certainly possible to use another kind of thermoplastic resin in conjunction with aforesaid resin but in a quantity not exceeding the quantity of the principal component resin, in order to provide modified physical properties; and such use of additional resin or resins is within the scope of the invention. Among thermoplastic resins available for such supplementary-purpose addition are polyethylene, ethylene-vinyl acetate copolymer, ethylene-acrylic ester copolymer, polyarylate based multilayer polymer, polypropylene, ethylene-propylene copolymer, polyamide, polyethylene terephthalate, polyarylenearylate, polystyrene, styrene-butadiene-acrylonitrile resin, styrene-acrylonitrile resin, polycarbonate, polyphenylene oxide, polyphenylene sulfide, polybutadiene, cholorinated polyethylene, chlorinated polypropylene, polyvinyl chloride, and butyl rubber.

The potassium titanate fibers used in the invention are fine, white needle-like single-crystal fibers having a means fiber length of 5 - 120 micron, preferably 10 - 20 micron, and a mean fiber diameter of 0.1 - 1.0 micron, preferably 0.1 to 0.4 micron. Such fibers are used in a quantity range of 3 - 50 wt % relative to the total weight of the composition. If such fiber content is less than 3% by weight, it is not sufficient to provide an effective reinforcement for the resin component; and if such fiber content is more than 50% by weight, it is undesirable from the standpoints of processability - e.g., extrusion or Nolding - and abrasion / wear resisting quality. Preferred quantity range for such fiber content is 5 - 30 wt%.

In order to facilitate bonding of the potassium titanate fibers with the resin, it is desirable that the fibers be previously surface treated with any known surface treating agent which is commonly used with inorganic fillers, or that at the stage of stock preparation, a surface treating agent be added in conjuction with the potassium titanate fibers. Examples of surface treating agents available for this purpose are those composed of any of functional compounds such as silane, epoxy, isocyanate, and titanate. More particularly, aminosilane-based and epoxysilane-based ones are preferred.

In addition, the composition for the rotary parts according to the invention should preferably includes carbon fibers.

Carbon fibers available for use in the invention are produced from cellulose, polyacrylonitrile, lignin, or pitch fibers and by calcining same at high temperatures. More particularly, graphitized fibers produced by calcining at more t-an 2000° C are suitable, and above all, those obtained by precessing under drawing conditions and having high modulus of elasticity and high strength are most preferred. Such fibers are preferably of 1 - 20 micron in diameter and 0.1 -10 mm in length, and more preferably 4 - 13 micron in diameter and 1.0 - 10 mm. It is desirable that the carbon fibers be surface treated with a surface treating agent simular to the one used with the potassium titanate fibers or be added simultaneously with such agent at the stage of stock preparation. Carbon fibers are used in a quantity range of 0 - 20 wt%, preferably 2 - 10 wt%, relative to the total weight of the composition; and it is desirable that the total quantity of the carbon fibers and potassium titanate fibers should be not more than 60% by weight relative to the composition as a whole.

Compositions in which engineering plastics such as polyethylene terephthalate or polyacetal resin are loaded with various inorganic fillers are known. More particularly, glass fillers and fibrous glass fillers are widely used for such loading purposes; and it is well known that reinforcement through the use of such conventional fillers is useful for machine parts and the like. However, compositions including such conventional fillers, e.g., glass fibers, are not desirable because of their unfavorable frictional properties, which mean greater abrasion loss caused to rotary parts such as toothed wheels. Certain types of fillers are undesirable since they have an adverse effect on the mechanical strength. Certain other types of fillers are undesirable because they are disadvantageous from the standpoints of processability and mass production adaptability. After all, it has been found that a particular composition comprising such combination of ingredients as defined in this invention, that is, a polybutylene terephthalate or polyacetal composition containing potassium titanate fibers or, more particularly, potassium titanate fibers and carbon fibers, has a balanced combination of various essential characteristics required for rotary parts, such as toothed wheels, and which any combination of other resins and other fillers does not provide; and this finding has led to this invention.

The resin composition of which the rotary parts, such as toothed wheels, in accordance with the invention are made may contain, in addition to aforesaid ingredients, known additives, such as for example stabilizers, lubricants, crystallization accelerators, colorants, antifriction agents, antistatic agents, other surface-active agents, and flame retardants, which are conventionally incorporated into polybutylene terephthalate or polyacetal resin compositions, in order to reinforce and/or improve some of its properties as desired.

Further, it is certainly possible that other known inorganic fillers may be present in the composition within such limits as may not be detrimental to the object and purpose of the invention.

Fabrication of gears and other rotary parts in accordance with the invention may be performed by conventional techniques employed in the production of ordinary thermoplastic resin molded parts. Generally, aforesaid ingredients are melted and mixed in an extruder, from which the mixture is extruded into a homogeneous resin composition in pellet form; the composition is then injection molded into parts by employing molding machines. Pellets of such resin composition may be prepared by employing a conventional extruder of either single screw type or twin screw type. Fillers and the like may be added in simultaneous way or in two stages emplying a side feeder.

For molding purposes, any method which is usually employed in molding thermoplastic resins may be applied. Various molding techniques may be employed including not only injection molding, but also extrusion molding, press molding, punching, and cutting. In injection molding, it is possible to produce rotary parts as

3

integral moldings with a shaft or the like of metal or some other different material incorporated therein by employing outsert or insert molding techniques.

The rotary parts according to the invention typically embrace all kinds of gears including, for example, spur gears and codrum gears of ordinary type, and more particularly, gears wherein the intermeshing pitch circle is not on same plane as the direction of power transmission or wherein the pitch helical line is not parallel to the axis of the pitch drum, e.g., helical gears, double helical gears, straight bevel gears, spiral bevel gears, zerol bevel gears, crossed helical gears, hypoid gears, worm gears, and conditional worm gears; further, they include cams, pulleys, rollers, and all other kinds of machine parts whose operation involves rotation. These gears and other rotary parts may be advantageously used as components in various fields of application including electronic and electrical equipment, auto vehicles, and other machinery, equipment, and miscellaneous articles. More particularly, they are suitable for use in the field of electronic and electric equipment, such as electronic copying machines, and of automotive applications, such as wiper gears, where severe use embironment is involved.

(Advantages of the Invention)

As above stated, and as will be apparent from the examples to be given hereinafter, the rotary parts according to the invention are light in weight and have advantageous characteristics of resin-made gears, such as self-lubricating property, non-corrosiveness, low noise property, and efficient fabricability (mass-production adaptability), and concurrently they have improved machanical and physical properties (rigidity, strength characteristics, abrasion resistance, and dimensional accuracy) which conventional resin-made gears do not have. More particularly, they have high heat resistance and high thermal deformation point, which fact is reflected in their remarkably improved mechanical properties under severe conditions such as high-temperature and high-humidity conditions. For example, in the case of gears for use under comparatively high temperature conditions, the rotary parts of the invention meets practical performance requirements of gears, such as high dedendum strength and high dimensional strength at addendum. They have a balanced combination of various performance characteristics required of rotary parts for various machines. The are well expected to meet needs for a wide range of machinery and equipment parts.

(Examples

The following examples are given to further illustrate the invention; however, it is to be understood that the invention is not limited by these examples.

Examples 1 - 4

A polybutylene terephthalate resin (produced by Polyplastics Co., Ltd.; trade name "Duranex 2002"), potassium titanate fibers, and carbon fibers are homogeneously mixed in such proportions as shown in Table 1, and the mixture was melt extruded into pellets. By employing the outsert technique the pellets were then injection molded into spur gears having a metal shaft. Each spur gear was of such configuration as shown in Fig. 1 and had a pitch circle diameter of 57.8 m/m and a module of 1.1 m/m. The spur gear so molded was allowed to stand in a thermostatic chamber at 23°C, 50% R.H. for 24 hours, and thereafter it was examined as to its dedendum strength at 23°C and 130°C.

Dedendum strength measurements were made by holding each spur gear specimen in mesh relation with a worm of a fixed metal worm gear and forcibly rotating the spur gear, so that the strength of the spur gear at breaking point was measured by a torsion tester of Shimazu make.

Specific abrasion were measurements were made with a cylindrical test piece prepared as shown in Fig. 2 and by a thrust wear tester of Oiless Kokyo make. The test piece, rotated at a constant speed, was pressed and brought in contact at three points with a pin (S45C, Ø10 dia, 10 mm long, sintered), whereby abrasion wear of the test piece for a predetermined time was measured.

Measurement conditions were: linear slide speed 78.1 cm/sec (N = 660 rpm), mean contact pressure p = 255 kg/cm$^2$ (load 0.4 kg x 3).

Thermal deformation temperature were measured in accordance with ASTM-D648.

The test results are shown in Table 1.

Comparative Examples 1 - 4

Same type of polybutylene terephthalate resin as used in Examples 1 - 4, and fillers in the form of glass fiber, glass bead, or mica, are mixed in such proportions as shown in Table 1, and the mixture was molded into spur gears in the same manner as in Examples 1 - 4. Measurements were made of the dedendum strength, specific abrasion wear, and thermal deformation point of each spur gear.

Test results are shown in Table 1.

Table 1

| | | Example 1 | Example 2 | Example 3· | Example 4 | Comp. Exmp. 1 | Comp. Exmp. 2 | Comp. Exmp. 3 | Comp. Exmp. 4 |
|---|---|---|---|---|---|---|---|---|---|
| Composition (wt%) | Polybutylene terephthalate resin | 84.7 | 84.7 | 84.7 | 74.4 | 100.0 | 70.0 | 70.0 | 70.0 |
| | Carbon fiber | | 5.0 | 7.5 | 5.0 | | | | |
| | Potassium titanate fiber | 15.0 | 10.0 | 7.5 | 20.0 | | | | |
| | Glass fiber | | | | | | 30.0 | | |
| | Glass bead | | | | | | | 30.0 | |
| | Mica | | | | | | | | 30.0 |
| | Epoxysilane-type treating agent | 0.3 | 0.3 | 0.3 | 0.6 | | | | |
| Measurement Items | Dedendum strength (kg·cm) 23°C | 791 | 807 | 829 | 838 | 487 | 742 | 510 | 528 |
| | 130°C | 344 | 419 | 427 | 438 | 209 | 426 | 267 | 204 |
| | Specific abrasion wear ($mm^3$/kg·km) | $1.6 \times 10^{-2}$ | $1.3 \times 10^{-2}$ | $0.98 \times 10^{-2}$ | $1.3 \times 10^{-2}$ | $5.4 \times 10^{-2}$ | $15.2 \times 10^{-2}$ | $14.3 \times 10^{-2}$ | $0.02 \times 10^{-2}$ |
| | Thermal deformation temp. (°C) ($18.6$kg·f/$cm^2$) | 208 | 209 | 211 | 214 | 78 | 213 | 175 | 146 |

0 233 729

Examples 5 - 6

A polyacetal resin (made of Polyplastics Co., Ltd.; trade name "Duracon M-25"), and potassium titanate fibers and carbon fibers are homogeneously mixed in such proportions as shown in Table 2, and the mixture was melt extruded into pellets. The pellets were mold into spur gears in same way as in Examples 1 - 4. Measurements were made of the dedendum strength, specific abrasion wear, and thermal deformation point of each spur gear.

The results are shown in Table 2.

Comparative Examples 5 - 6

Same type of polyacetal resin as used in Examples 5 - 6, and glass fibers as fillers were mixed in such proportions as shown in Table 2, and the mixture was melt extruded into pellets. The pellets were molded into spur gears in same way as in Examples 1 - 4. Measurements were made of the dedendum strength, specific abrasion wear, and thermal deformation point of each gear.

The results are shown in Table 2.

## Table 2

| | | | Example 5 | Example 6 | Comp. Exp. 6 | Comp. Exp. 6 |
|---|---|---|---|---|---|---|
| Composition (wt%) | Polyacetal resin | | 85.0 | 85.0 | 100 | 70.0 |
| | Carbon fiber | | | 7.5 | | |
| | Potassium titanate fiber | | 15.0 | 7.5 | | |
| | Glass fiber | | | | | 30.0 |
| Measurement Items | Dedendum strength (kg·cm) | 23°C | 988 | 992 | 880 | 956 |
| | | 130°C | 398 | 412 | 326 | 406 |
| | Specific abrasion wear (mm3/kg·km) | | $2.3 \times 10^{-2}$ | $1.6 \times 10^{-2}$ | $3.6 \times 10^{-2}$ | $15.0 \times 10^{-2}$ |
| | Thermal deformation temp. (°C) (18.6kg·f/cm2) | | 159 | 162 | 110 | 168 |

## Claims

-1- Rotary parts which comprises a moulded article of a resin composition comprising 50 to 97 wt.% of polybutylene terephthalate or polyacetal and 3 to 50 wt.% of fibers of potassium titanate.

-2- Rotary parts as claimed in Claim 1, in which said composition further contains up to 20 wt.%, based on the entire composition, of carbon fibers.

Fig. 1

(a)

1

2

(b)

1

G

Fig. -2

(a)

25.6

(b)

19.7

15.0